# EUROPÄISCHE PATENTSCHRIFT

(11) **EP 2 648 125 B1**
(45) Veröffentlichungstag und Bekanntmachung des Hinweises auf die Patenterteilung: **19.11.2014**
(21) Anmeldenummer: 12158009.6
(22) Anmeldetag: 05.03.2012
(51) Int. Cl.: G06F 21/10, G06F 21/12, G06F 21/14, H04L 9/00, H04L 9/14

(54) **Verfahren zur Autorisierung eines Programmablaufs**
Method for authorising a program sequence
Procédé d'autorisation d'un déroulement de programme

(43) Veröffentlichungstag der Anmeldung: 09.10.2013
(73) Patentinhaber: Steinberg Media Technologies GmbH, 20097 Hamburg (DE)
(72) Erfinder: Kaid, Almar, 22143 Hamburg (DE); Peeters, Bernd, 23669 Timmendorfer Strand (DE); Rogowski, Thomas, 22111 Hamburg (DE)
(74) Vertreter: Raffay & Fleck

(56) Entgegenhaltungen:
- EP-A2- 1 526 427
- DE-A1- 10 319 435
- US-B1- 6 643 775
- COLLBERG C ET AL: "A Taxonomy of Obfuscating Transformations", TECHNICAL REPORT DEPARTMENT OF COMPUTER SCIENCE UNIVERSITY OFAUCKLAND, XX, XX, Nr. 148, 1. Juli 1997 (1997-07-01), Seiten 1-36, XP002140038,
- SANDER T ET AL: "Towards mobile cryptography", SECURITY AND PRIVACY, 1998. PROCEEDINGS. 1998 IEEE SYMPOSIUM ON OAKLAND, CA, USA 3-6 MAY 1998, LOS ALAMITOS, CA, USA,IEEE COMPUT. SOC, US, 3. Mai 1998 (1998-05-03), Seiten 215-224, XP010280361, DOI: 10.1109/SECPRI.1998.674837 ISBN: 978-0-8186-8386-2
- Edmund M. Clarke ET AL: "Modeling Systems" In: "Model Checking", 1. Januar 1999 (1999-01-01), The MIT Press, Cambridge, Massachusetts, XP55028626, ISBN: 978-0-26-203270-4 Seiten 13-26, * Abbildung 2.2 *
- Diego Bendersky ET AL: "Advanced Software Protection Now", , 11. Juni 2010 (2010-06-11), XP55028429, Gefunden im Internet: URL:http://arxiv.org/pdf/1006.2356v1.pdf [gefunden am 2012-05-30]
- CHANG H ET AL: "Protecting Software Code by Guards", LECTURE NOTES IN COMPUTER SCIENCE/COMPUTATIONAL SCIENCE (CPAIOR 2011), SPRINGER, DE, Bd. 2320, 10. Juni 2002 (2002-06-10), Seiten 160-175, XP002245264, DOI: 10.1007/3-540-47870-1_10 ISBN: 978-3-540-24128-7

## Beschreibung

Die vorliegende Erfindung betrifft ein Verfahren zur Autorisierung eines Programmablaufs sowie ein entsprechendes Computerprogramm, einen Datenträger, aufweisend ein solches Computerprogramm sowie eine entsprechend eingerichtete Datenverarbeitungsanlage.

Aus dem Stand der Technik ist es, wie beispielsweise aus der US 6,643,775 B1, grundsätzliche bekannt eine Softwareautorisierung durchzuführen. Dies kann beispielsweise durch Eingabe entsprechender Lizenzschlüssel oder wiederkehrend durch "Challenge-Response"-Protokolle erfolgen. Hierbei wird an einer Stelle des Programmcodes ein mit einem kryptographischen Verfahren verschlüsselter Wert an ein externes Modul gesendet, auf dessen interne Rechenabläufe der Benutzer der Applikation keinen Zugriff hat und nur die Input- und Outputdaten beobachten kann. Das externe Modul, welches über die entsprechenden kryptographischen Algorithmen verfügt, entschlüsselt den Wert, führt auf dem Klartext gewisse Operationen durch und gibt das verschlüsselte Resultat zurück an den eigentlichen Programmcode. Empfängt der eigentliche Programmcode das korrekte Ergebnis, so werden die weiteren Instruktionen im Programmcode korrekt abgearbeitet. Ist das Ergebnis falsch, d. h. es ist beispielsweise von außen manipuliert worden, oder es wird überhaupt kein Ergebnis zurückgegeben, so bewirkt dies ein Fehlverhalten bzw. Sperren der Software. Solche externen Module können beispielsweise durch USB-Dongles oder Smartcards gebildet werden.

Bei dem oben beschriebenen Verfahren entstehen durch die Kommunikation mit dem externen Modul Latenzzeiten im Programmablauf. Dies macht es sowohl unmöglich, den Autorisierungsprozess in performance-kritischen Programmfunktionalitäten zu integrieren, als auch in Funktionalitäten, welche vom Nutzer der Applikation häufig oder mit einer gewissen Kontinuität benutzt werden, da ansonsten störende Verzögerungen im Programmfluss bzw. in der Bedienung der Applikation auftreten würden. Dies gilt insbesondere dann, wenn das externe Modul nicht direkt angeschlossen würde, sondern durch möglicherweise sogar gestörte Kommunikationsmittel mit dem Programm beziehungsweise der entsprechenden Datenverarbeitungsanlage verbunden wäre. Somit wird bei dem Einsatz von "Challenge-Response"-Protokollen meist ein Kompromiss zwischen Sicherheit und Performance erzielt, auch wenn eine Einbindung des Autorisierungsprozesses in essentielle Basisfunktionalitäten die Qualität des Schutzes erhöhen würde.

Darüber hinaus ist es in derartigen Verfahren üblicherweise nicht sicher möglich, den Ablauf bzw. die Häufigkeit der Autorisierung zu steuern bzw. statistische Parameter einzuführen oder zu verändern, die die Wahrscheinlichkeit oder Häufigkeit der Ausführung der Autorisierungsprozesse steuern. Wird eine solche Änderung des eigentlichen Programms beziehungsweise des für die Autorisierung zuständigen Programmteils ermöglicht, so bietet dies häufig eine einfache Möglichkeit der Manipulation von außen und stellt damit ein erhebliches Sicherheitsrisiko für den Schutz des Programmablaufs dar.

Darüber hinaus stellt die Verwendung eines externen Moduls einen großen Material-, Kosten- und Verwaltungsaufwand dar. Daher ist eine Zentralisierung externer Module, beispielsweise durch einen Server im Internet, wünschenswert.

Des Weiteren ist es aus dem Stand der Technik, wie beispielsweise der XP002140038 bekannt, Programmcode gegen Eingriffe von außen zu verschleiern. Des Weiteren ist aus der XP010280361 bekannt, Zugriffsschutz unter Verwendung homomorpher Verschlüsselungsalgorithmen zu erreichen.

Aus dem Dokument DE10319435 ist ein kryptographisches Verfahren bekannt, bei dem zusammengesetzte endliche Automaten für die Berechnung von verschlüsselten Ergebnissen aus verschlüsselten Argumenten verwendet werden.

Die Aufgabe der vorliegenden Erfindung ist es somit, die bekannten Autorisierungsmethoden dahingehend zu erweitern, dass trotz einer Zentralisierung und damit verbundener großer Latenzzeiten und gegebenenfalls gestörter Kommunikation ein ungestörter Programmablauf auch bei Schutz von Basisfunktionalitäten ermöglicht wird. Darüber hinaus soll auch die Steuerung der Auslösung des Autorisierungsprozesses im Entwicklungsstadium des Computerprogrammprodukts kontrollierbar sein. Aber auch eine Steuerung der Auslösung des Autorisierungsprozesses von außerhalb des zu autorisierenden Verfahrens, beispielsweise durch das externe Modul, wird durch die vorliegende Erfindung ermöglicht.

Dies wird gelöst durch ein Verfahren gemäß Anspruch 1, ein Computerprogrammprodukt gemäß Anspruch 13, einen Datenträger gemäß Anspruch 14 sowie eine Datenverarbeitungsanlage gemäß Anspruch 15. Die abhängigen Unteransprüche 2 - 12 geben vorteilhafte Weiterbildungen an.

Die Aufgabe wird erfindungsgemäß dadurch gelöst, dass die aufwendigen Autorisierungsprozesse zumindest teilweise in einen Zeitpunkt verlagert werden, in dem Latenzzeiten unkritisch sind. Die Verlagerung der Autorisierungen sowie die Möglichkeit der Verwendung eines zentralen externen Moduls ermöglichen darüber hinaus auch weitere innovative Lizenzierungsmöglichkeiten. Die Erfindung ist dabei jedoch nicht auf die Lizenzierung von Software beschränkt. Eine Autorisierung eines Programmablaufes kann auch im Rahmen anderer Prozesse wie beispielsweise Zugriffssteuerungen, bei denen nicht jeder Zugriff sicherheitsrelevant ist, erfolgen.

Zu diesem Zweck wird erfindungsgemäß ein Programmablauf vorgesehen, der vor unbefugter Benutzung geschützt werden soll und dessen Benutzung zu autorisieren ist. Der Programmablauf kann dabei eine beliebige Funktion in einer Software darstellen.

Auch ist es denkbar, verschiedene Anweisungen, Funktionen oder Verfahren durch entsprechende erfindungsgemäße Vorkehrungen zu schützen und/oder zu autorisieren.

Verfahrensgemäß wird die Möglichkeit vorgehalten, Daten des Programmablaufs in verschiedenen vorgesehenen Zuständen vorzuhalten. Diese sind beispielsweise durch Indizes gekennzeichnet oder kennzeichenbar. Vorteilhafterweise handelt es sich bei den Daten um langlebige Daten, insbesondere einer langlebigen Variablen, des Programmcodes. Dies erhöht die Sicherheit weiter.

Darüber hinaus ist mindestens eine Anweisung des Programmablaufs, die auf die Daten zugreift, in unterschiedlichen, funktional äquivalenten Implementierungen vorgehalten, wobei die Menge der Implementierungen durch eine nicht leere endliche Multimenge über dem kartesischen Produkt der Menge der Zustandsindizes der vorgesehenen Zustände der Daten mit sich selbst parametrisiert wird und wobei jede Implementierung die Daten von einem Eingangszustand in einen Ausgangszustand überführt. Dabei sind Eingangszustand und Ausgangszustand Bestandteil der vorgesehenen Zustände.

Erfindungsgemäß bilden die Menge der Zustandsindizes der vorgesehenen Zustände und die Multimenge der Implementierungsindizes einen gerichteten und zyklenfreien (Multi-)Graphen, wobei die vorgesehenen Zustände die Knoten und die funktional äquivalenten Implementierungen der Anweisung die Kanten und/oder Mehrfachkanten des Graphen bilden. Durch diese Implementierung der vorgesehenen Zustände und die Implementierungen der Anweisung und den dadurch gebildeten (Multi-)Graphen wird die erfindungswesentliche Grundlage zur Durchführung des Verfahrens geschaffen. Dadurch wird insbesondere eine asynchrone Autorisierung ermöglicht.

Bei einem Eingangszustand einer der funktional äquivalenten Implementierungen kann es sich definitionsgemäß nicht um eine Senke des Graphen handeln. Eine Senke des Graphen stellt erfindungsgemäß einen Zwangsautorisierungszustand dar, indem ohne Autorisierung keine der Implementierungen der Anweisung des Programmablaufs ausgeführt werden kann. Allerdings ist es möglich, dass ein Ausgangszustand ein Zwangsautorisierungszustand ist. Dann, wenn der Ausgangszustand kein Zwangsautorisierungszustand ist, ist ein Ausgangszustand einer ersten Implementierung ein Eingangszustand mindestens einer weiteren Implementierung.

Je nach Wahl der vorgesehenen Zustände und Implementierungen, also der Konfiguration des Graphen bzw. Multigraphen können verschiedene Autorisierungsmodelle implementiert werden. So kann vorteilhafterweise die Anzahl der vor der ersten Autorisierung beziehungsweise unautorisiert möglichen Ausführungen der Anweisung bestimmt werden. Durch die Konfiguration des Graphen und der Wahl des initialen Zustandes der Daten im Programmablauf zu Beginn des Programmablaufs (Startpunkt im Graphen) ist eine solche Vorbestimmung möglich. Hier kann beispielsweise eine Quelle des Graphen als initialer Zustand gewählt werden. Durch das Maximum über die Länge der Wege von dem initialen Zustand zu einem Zwangsautorisierungszustand im Graphen wird die Anzahl der unautorisierten Ausführungen der Anweisung im Programmablauf bestimmt.

Darüber hinaus ist im Programmablauf mindestens ein Autorisierungsprogrammablaufpfad existent, bei dem Übergabedaten an eine Autorisierungskomponente übergeben werden. Dabei kann der Autorisierungsprogrammablaufpfad Bestandteil des Programmablaufs sein und/oder zumindest teilweise in eine eigenständige Komponente ausgegliedert sein. Die Autorisierungskomponente kann mit dem bekannten externen Modul vergleichbar oder in einem solchen beinhaltet sein. Sie kann lokal oder entfernt angeordnet sein. Sie gibt, insbesondere nur bei Vorliegen vorbestimmter Bedingungen, mindestens eine autorisierte Information zurück. Das Verfahren ist dabei dadurch gekennzeichnet, dass die autorisierte Information zur Veränderung des Zustandes der Daten in einen der vorgesehenen Zustände (denselben oder einen anderen) oder zur Veränderung der Daten selbst verwendet wird und zwar insbesondere nur dann, wenn die Daten und/oder ihr Zustand seit der Übergabe der Übergabedaten nicht verändert wurde bzw. wurden. Insbesondere wird es dadurch auch möglich, als ersten Zustand eine Senke des Graphen zu wählen.

Je nach Ausgestaltung des mindestens einen Autorisierungsprogrammablaufpfades und/oder der Autorisierungskomponente kann eine Überführung in unterschiedliche Zustände erfolgen. Dadurch kann nach einer Autorisierung eine unterschiedliche Anzahl von weiteren Ausführungen der Anweisung des Programmablaufpfades in Form der vorgehaltenen Implementierungen, welche keinen Autorisierungsprozess erfordern, möglich sein. Dadurch lässt sich auch durch die Autorisierungskomponente eine Veränderung der Autorisierungsdynamik erzielen. Auch kann dem Autorisierungsprogrammablaufpfad von der Autorisierungskomponente mitgeteilt werden, inwiefern er vor Erreichen eines Zwangsautorisierungszustandes eine Autorisierung versuchen soll.

So kann beispielsweise der Multigraph verschiedene Äste aufweisen und durch eine Autorisierung ein Wechseln von einem Ast des Graphen zum anderen erfolgen oder ein definierter Rücksprung auf einem Ast durchgeführt werden.

Durch eine solche Autorisierung kann beispielsweise ein Verhalten erreicht werden, bei dem eine vorbestimmte Anzahl von Ausführungen der Anweisung ohne Autorisierung möglich ist und erst danach eine Autorisierung erfolgen muss, die beispielsweise anschließend wieder eine vorbestimmte Anzahl von Ausführungen ohne weitere Autorisierung ermöglicht. In einer solchen Ausgestaltung, wie auch im Allgemeinen, kann die Autorisierung vorteilhafterweise auch vor der Erreichung eines Zwangsautorisierungszustandes erfolgen. So kann vorteilhafterweise parallel zum normalen Programmablauf kontinuierlich versucht werden, eine Autorisierung zu erlangen und dadurch den Weg auf dem Graphen bis zum Zwangsautorisierungszustand zu verlängern. Dies ist insbesondere jedoch nur dann erfolgreich, wenn in der Zwischenzeit keine weitere der Implementierungen auf die Daten angewandt wurde. Eine solche Ausgestaltung ist insbesondere dann von Vorteil, wenn die Verbindung zur Autorisierungskomponente nicht immer und/oder nicht ungestört gegeben ist oder eine Autorisierung mit einer vergleichsweise großen Latenzzeit verbunden ist.

Zur Autorisierungskomponente hat der Benutzer vorteilhafterweise nur Black-Box-Zugang (etwa repräsentiert durch einen Server im Internet oder eine lokal an das Rechensystem, welches das Programm ausführt, angebundene Smart Card).

In unterschiedlichen Ausgestaltungen sind als mindestens eine autorisierte Information zahlreiche Informationen denkbar. Beispielsweise ist es möglich, die Daten in einem vorgesehenen Zustand als autorisierte Information zurückzugeben oder solche zu beinhalten, auch verschleiert oder verschlüsselt. Auch kann Information über den Zustand oder den Inhalt der weiteren autorisierten Information beinhaltet sein. So können beispielsweise die Daten oder veränderte Daten in einem vorgesehenen Zustand und eine Information über den Zustand als autorisierte Information zurückgegeben werden. Auch die Übergabedaten können Daten bezüglich eines Zustandes oder des Zustandes der Daten beinhalten.

Als vorbestimmte Bedingungen sind beispielsweise bestimmte Ergebnisse von Abfragen in einer Lizenzdatenbank, Zeitpunkte, Passworteingaben o. ä. denkbar.

Es ist auch möglich, mehrere oder verschiedene Autorisierungsprogrammablaufpfade vorzusehen. Beispielsweise kann die Wahl des anzuwendenden Autorisierungsprogrammablaufpfads von dem aktuellen Zustand abhängen.

Als Übergabedaten kommen zahlreiche Informationen in Frage. So können beispielsweise die Daten im aktuellen Zustand übermittelt werden. Auch andere/zusätzliche Informationen sind als Übergabedaten denkbar.

Erfindungsgemäß wird beim Aufruf der Anweisung im Programmablauf, wenn für den aktuellen Zustand mindestens eine Kante im Graphen existiert, die von dem Zustand weg zu einem anderen vorgesehenen Zustand führt, eine zu dieser Kante korrespondierende Implementierung ausgeführt.

Darüber hinaus ist die weitere Verwendung der Anweisung des Programmablaufs in einem Zwangsautorisierungszustand, der einer Senke des Graphen entspricht, erfindungsgemäß nur dann möglich, wenn ein Autorisierungsprogrammablaufpfad aufgerufen wird und die autorisierte Information von der Autorisierungskomponente zurückgegeben wird und sich die Daten nach Abarbeitung des Autorisierungsprogrammablaufpfades in einem der vorgesehenen Zustände befinden, insbesondere in einem Zustand, der keinen Zwangsautorisierungszustand darstellt.

Es sind prinzipiell zwei mögliche vorteilhafte Umsetzungen zu unterscheiden. Zum einen kann eine Verwendung der zu autorisierenden Anweisung des Programmablaufs nur im Programm vorgesehen sein. Befinden sich die Daten dann in einem Zwangsautorisierungszustand, so sind die Daten zunächst durch eine Autorisierung in einen vorgesehenen Zustand zu überführen, der keinen Zwangsautorisierungszustand darstellt, und es kann sodann eine passende Implementierung der zu autorisierenden Anweisung ausgeführt werden. Diese Umsetzung ist insbesondere geeignet, wenn das Verfahren zur asynchronen Autorisierung genutzt werden soll.

Zum anderen ist es möglich, eine der zu autorisierenden Anweisung in ihrer Funktionalität entsprechende Anweisung auch in der Autorisierungskomponente vorzuhalten und eine Verwendung der entsprechenden Anweisung der Autorisierungskomponente in der Autorisierungskomponente zu ermöglichen. In diesem Fall kann auch ausgehend von einem Zwangsautorisierungszustand die Funktionalität der zu autorisierenden Anweisung ohne vorherige Überführung in einen vorgesehenen Zustand, der keinen Zwangsautorisierungszustand darstellt, unter Verwendung der entsprechenden Anweisung der Autorisierungskomponente in der Autorisierungskomponente im Rahmen einer Autorisierung genutzt werden. Durch die Autorisierung wird dann die entsprechende Anweisung direkt in der Autorisierungskomponente ausgeführt. Die autorisierte Information beinhaltet das Ergebnis der Ausführung der entsprechenden Anweisung. Die Daten können dann nach der Autorisierung verändert in einem Zwangsautorisierungszustand, insbesondere demselben wie vor der Autorisierung, oder einem anderen vorgesehenen Zustand vorliegen. Diese Umsetzung des Verfahrens eignet sich, wenn der Programmablauf Vorgänge beinhaltet, für die eine synchrone Autorisierung genutzt werden soll.

Durch das erfindungsgemäße Verfahren ist es möglich, die Anweisung des Programmablaufes durch ihre Implementierungen solange auszuführen, bis man durch die Ausführungen der funktional äquivalenten Implementierungen der Anweisung in einen Zwangsautorisierungszustand, also eine Senke des Graphen, gelangt. In einer solchen Senke ist eine Ausführung der Anweisung des Programmablaufs nicht möglich, da keine passende Implementierung vorgesehen ist und eine Rückführung in einen vorgesehenen Zustand, der keine Senke ist, ohne Autorisierung nicht vorgesehen und/oder nicht möglich ist.

Auch wenn das Verfahren durch seinen Verfahrensablauf an sich schon Eingriffe/Manipulationsversuche von außen zur Nutzung der Anweisung ohne vorgesehene Autorisierung erschwert, so werden vorteilhafterweise zur Sicherung die Daten in den vorgesehenen Zuständen und/oder die Implementierungen der Anweisung ausschließlich oder zum Teil verschleiert und/oder verschlüsselt vorgehalten. Vorteilhafterweise wird im Fall der Verschlüsselung für jeden der vorgesehenen Zustände zur Verschlüsselung der Daten ein eigener, für den verwendeten Verschlüsselungsalgorithmus geeigneter, kryptographischer Schlüssel verwendet. Dadurch wird die Sicherheit deutlich erhöht. So kann jeder vorgesehene Zustand einen vorgesehenen Verschlüsselungszustand darstellen. Weiter können die Implementierungen die Daten von einem vorgesehenen Verschlüsselungszustand in einen anderen vorgesehenen Verschlüsselungszustand überführen.

Generell ist anzumerken, dass die Implementierung von Verschlüsselungsverfahren in Software, welche in einer nicht vertrauenswürdigen Umgebung ausgeführt wird, oft leicht zu manipulieren ist und daher oft im Programmcode verschleiert wird, etwa mit Methoden der Programmcode-Obfuscation oder White-Box-Kryptographie. Im Sinne dieser Anmeldung kann jeweils sowohl eine Verschleierung als auch eine Verschlüsselung gewählt werden, je nachdem, welche Anforderungen an die Sicherheit gestellt werden. Insbesondere können Verschleierung und Verschlüsselung kombiniert werden.

Mit besonderem Vorteil ist gemäß Anspruch 3 der verwendete Verschlüsselungsalgorithmus Bestandteil eines kryptographischen Verfahrens, insbesondere Multichannel Finite Automata Code Transformation, wobei das Verfahren es erlaubt, Operationen auf Argumenten, die mit verschiedenen Schlüsseln verschlüsselt sind, durchzuführen, ohne die jeweiligen Argumente zu entschlüsseln. Dabei verwenden die funktional äquivalenten Implementierungen der mindestens einen Anweisung sowie die Implementierungen von Teilen des mindestens einen Autorisierungsprogrammablaufpfades dieses kryptographische Verfahren ganz oder teilweise.

Dies bedeutet, dass die Daten bzw. die Zustände der Daten zur Anwendung der Funktion nicht entschlüsselt werden müssen und somit innerhalb des Programmablaufs nicht entschlüsselt bzw. entschleiert vorliegen müssen. Insbesondere können die funktional äquivalenten Implementierungen der zu autorisierenden Anweisung die Umverschlüsselung von Eingangs- zu Ausgangszustand bezüglich der jeweiligen kryptographischen Schlüssel beinhalten. Dies erhöht die Sicherheit deutlich.

Die Anweisung bzw. die funktional äquivalenten Implementierungen nehmen vorteilhafterweise mindestens ein weiteres Argument entgegen, sodass sie eine Operation auf den Daten unter Verwendung des weiteren Arguments durchführen können und insbesondere bei jeder Ausführung durchführen. Dabei nehmen sie das weitere Argument vorteilhafterweise in einer verschlüsselten Variante entgegen.

Mit besonderem Vorteil hat die Anweisung lesenden und schreibenden Zugriff auf die Daten und nimmt insbesondere bei jeder Ausführung lesenden und schreibenden Zugriff auf die Daten. Eine Zustandsveränderung allein würde diese Anforderung nicht erfüllen. Jede der funktional äquivalenten Implementierungen schreibt die Daten dann im Ausgangszustand. Des Weiteren wird jede vorgehaltene Implementierung nur bei Anwendung auf Daten in dem entsprechenden Eingangszustand der Implementierung der Anweisung korrekt ausgeführt. Dadurch wird sichergestellt, dass eine Implementierung nach ihrer Anwendung auf die Daten nicht unmittelbar erneut auf die Daten angewandt werden kann.

Jede Implementierung versetzt bei Anwendung auf Daten in jedem anderen als dem zugehörigen Eingangszustand den Programmablauf in einen Fehlerzustand oder einen nicht zweckmäßigen Zustand, was etwa durch die genannten kryptographischen Verfahren erreicht werden kann. Insbesondere führt eine direkte Änderung der Daten und/oder direkte Änderung mindestens einer der Implementierungen oder der Zustände beim Anwenden einer geänderten Implementierung oder bei Anwendung einer Implementierung auf die geänderten Daten zu einem Fehlerzustand oder einem nicht zweckmäßigen Zustand und/oder zu einem Ausnahmezustand der Daten, der nicht Bestandteil der vorgesehenen Zustände ist und somit eine weitere Ausführung der Anweisung unmöglich macht, da keine passende Implementierung verfügbar ist.

Durch das Versetzen in einen nicht zweckmäßigen Zustand wird ein Ergebnis bewirkt, das über das reine Verhindern der Ausführung der Anweisung hinausgeht und weitere Konsequenzen mit sich bringt. So kann beispielsweise der weitere Programmablauf gestört werden, so dass der Programmablauf auf Grund eines inkonsistenten Datenbestandes nicht mehr korrekt arbeitet und/oder das gesamte Programm gesperrt wird und/oder mindestens eine entsprechende Meldung oder Warnung initiiert wird.

Mit besonderem Vorteil ist die von der Autorisierungskomponente zurückgegebene autorisierte Information von den Übergabedaten abhängig. Dadurch wird die Sicherheit weiter erhöht. Vorteilhafterweise ermöglicht die autorisierte Information dem Autorisierungsprogrammablauf ausgehend von einem vorgesehenen Zustand der Daten die Überführung der Daten in einen der vorgesehenen Zustände, insbesondere einen Zustand, der keinen Zwangsautorisierungszustand darstellt, dies jedoch insbesondere nur dann, wenn seit der Übergabe der Übergabedaten an die Autorisierungskomponente und/oder den Autorisierungsprogrammablaufpfad der Zustand der Daten und/oder die Daten nicht geändert wurde/wurden. Bevorzugt sind derartige Informationen innerhalb der autorisierten Information erforderlich, um dem Autorisierungsprogrammablauf eine solche Überführung zu ermöglichen. Somit kann der Autorisierungsprogrammablauf und auch der Programmablauf, abgesehen von der Anwendung der vorgehaltenen Implementierungen, nicht selbst und ohne ein Zusammenwirken mit der Autorisierungskomponente eine Überführung eines Zustandes in einen anderen der vorgesehenen Zustände vornehmen bzw. insbesondere auch die Daten innerhalb eines Zustandes nicht verändern. Dazu benötigt er insbesondere eine entsprechend autorisierte Information bzw. eine Umverschlüsselung durch die Autorisierungskomponente.

Durch eine solche Umverschlüsselung innerhalb der Autorisierungskomponente kann beispielsweise eine Überführung der Daten von einem Zustand in einen anderen der vorgesehenen Zustände erfolgen und dadurch beispielsweise der verbleibende Weg auf dem Ast des Graphen bis zum Zwangsautorisierungszustand vergrößert werden. Verfügt der Programmablauf an sich und insbesondere auch der Autorisierungsprogrammablauf nicht über die notwendigen Mittel bzw. Informationen, eine solche Umverschlüsselung, abgesehen von der Anwendung der vorgehaltenen Implementierungen, vorzunehmen, so ist die Sicherheit weiter erhöht. Mit Vorteil ist das Maximum über die Länge der Wege von dem Zustand nach der Überführung zu einem Zwangsautorisierungszustand im Graphen größer oder gleich dem Maximum über die Länge der Wege von dem Zustand vor der Überführung zu einem Zwangsautorisierungszustand.

Auch kann die autorisierte Information zumindest in manchen Fällen der Autorisierung ein Ergebnis einer Anwendung einer zur Anweisung des Programmablaufs in ihrer Funktionalität entsprechenden Anweisung beinhalten. Dies bietet die Möglichkeit einer sicheren synchronen Autorisierung. Wird dies in allen Fällen der Autorisierung durchgeführt, liegt eine synchrone Autorisierung vor. Durch das Vorsehen nur in manchen Fällen, kann eine Kombination von synchroner und asynchroner Autorisierung erreicht werden.

Mit besonderem Vorteil werden gemäß Anspruch 7 die Übergabedaten an die Autorisierungskomponente verschleiert und/oder verschlüsselt übergeben. Im Fall der Verschlüsselung der Daten erfolgt die Verschlüsselung der Übergabedaten insbesondere durch einen weiteren, von dem für die Verschlüsselung der Daten verwendeten Verschlüsselungsalgorithmus verschiedenen Verschlüsselungsalgorithmus. Mit weiterem Vorteil gibt die Autorisierungskomponente die autorisierte Information verschleiert und/oder verschlüsselt, insbesondere durch einen weiteren, von dem für die Verschlüsselung der Zustände verschiedenen Verschlüsselungsalgorithmus zurück.

Mit besonderem Vorteil ist die Durchführung des Verfahrens in mindestens drei Komponenten gegliedert. Dabei gliedert sie sich vorteilhafterweise in Arbeitskomponente, eine Autorisierungskoordinationskomponente und eine Autorisierungskomponente. Dabei sind vorteilhafterweise die Daten des Programmablaufs, die Anweisungen des Programmablaufs und der Programmablauf Bestandteil der Arbeitskomponente. Der mindestens eine Autorisierungsprogrammablaufpfad führt dabei vorteilhafterweise die Übergabe der Übergabedaten an die Autorisierungskomponente durch und empfängt die von der Autorisierungskomponente zurückgegebene autorisierte Information. Darüber hinaus ist der Autorisierungsprogrammablaufpfad insbesondere unter Verwendung der autorisierten Information für die Überführung der Daten in einen der vorgehaltenen Zustände bzw. die Veränderung der Daten im vorgehaltenen Zustand zuständig. Dabei ist der Autorisierungsprogrammablaufpfad vorteilhafterweise Bestandteil der Autorisierungskoordinationskomponente.

Die Autorisierungskoordinationskomponente und/oder der Autorisierungsprogrammablaufpfad beziehungsweise deren Funktion können aber auch im Rahmen der Arbeitskomponente beziehungsweise des Programmablaufs vorgesehen sein.

Durch eine solche Gliederung in drei oder mehr Komponenten lassen sich die eigentliche Funktion, die Autorisierungsaufgabe mit direkter Zusammenwirkung mit der eigentlichen Funktion, und die Autorisierung an sich voneinander modularisiert trennen.

Dies ermöglicht eine entsprechende Kapselung. Dadurch lassen sich die einzelnen Komponenten auch parallel ausführen, was zu einer besonders reibungslosen Umsetzung und zu einem sehr vorteilhaften Umgang mit Latenzzeiten des Autorisierungsprozesses führt.

Somit werden vorteilhafterweise die Autorisierungskoordinationskomponente und die Arbeitskomponente parallel ausgeführt, insbesondere als selbstständige parallel laufende Computerprogrammbestandteile, insbesondere als eigenständige Threads oder als Teil eines selbstständigen, parallel laufenden Computerprogramms. Dadurch lassen sich die Autorisierungsvorgänge weitgehend ohne Einfluss auf die Arbeitskomponenten durchführen.

Mit besonderem Vorteil wird eine Statusinformation über die Daten des Programmablaufs, insbesondere über den aktuellen Zustand der Daten und/oder die verschiedenen kompatiblen Implementierungen, vorgehalten. Durch das Vorhalten einer solchen Statusinformation kann auf einfache Weise eine Information über den Zustand bzw. die von diesem Zustand ausgehend verfügbaren Implementierungen vorgehalten werden. Dies kann beispielsweise dann sinnvoll sein, wenn eine solche Information an die Autorisierungskomponente übermittelt bzw. von dieser zurückgegeben wird. Darin kann beispielsweise festgehalten sein, mit welchem Schlüssel oder mit welcher Schlüsselnummer die Daten im Zustand entschlüsselt bzw. umverschlüsselt werden können. Der Schlüssel an sich wird dazu vorteilhafterweise weder übertragen noch, abgesehen von der Autorisierungskomponente, im Klartext vorgehalten.

Mit weiterem Vorteil werden die vorgehaltenen Implementierungen zumindest teilweise und/oder mindestens ein Schlüssel zur Verschlüsselung der Daten bzw. der Implementierungen gemäß Anspruch 11 derart gewählt, dass sie aus mindestens einer zuvor ausgeführten Implementierung bzw. mindestens einem zuvor verwendeten Schlüssel und/oder ein oder einem Teil der vorgesehenen Zustände und/oder weiteren für den Programmablauf relevanten Daten nach einer Vorschrift bestimmt werden können. Insbesondere wird/werden vorteilhafterweise die Form der Vorschrift und gegebenenfalls Anfangswerte vorgehalten und daraus jeweils die entsprechende Implementierung bzw. der entsprechende Schlüssel generiert. Dies lässt sich beispielsweise durch Methoden der White-Box-Kryptographie abbilden. Bei einer solchen Umsetzung müssen nicht zahlreiche Implementierungen oder Schlüssel explizit und vollständig vorgehalten werden. Sie können jeweils aus den vorherigen bzw. anhand der vorgehaltenen Vorschrift erzeugt werden. Dies verringert die Größe des Programms.

Mit besonderem Vorteil wird gemäß Anspruch 12 die Autorisierungskomponente örtlich entfernt von der Durchführung der nicht durch die Autorisierungskomponente durchgeführten Schritte angeordnet bzw. durchgeführt. Insbesondere werden die an die Autorisierungskomponente zu übertragenden Übergabedaten und die autorisierte Information über ein Datenübertragungsnetzwerk, insbesondere das Internet, übergeben. Je nach Anforderungen an das Verfahren kann dadurch eine dezentralisierte Autorisierung ermöglicht werden. Auch kommen dabei die Vorteile des Verfahrens besonders zur Geltung, da auch Übertragungsprobleme über das Datenübertragungsnetzwerk durch das erfindungsgemäße Verfahren gepuffert werden können.

Das erfindungsgemäße Verfahren lässt sich in neuen wie in bestehenden Programmcodes umsetzen, beispielsweise, indem durch eine geeignete Transformation des Quellcodes sowohl die vorgesehenen Zustände der Daten als auch die funktional äquivalenten Implementierungen der Anweisung geschaffen werden.

Diese Transformation sowie die Verwendung der zu autorisierenden Anweisung kann wie im folgenden Beispiel durchgeführt werden:

Beispielsweise können als Daten der Inhalt einer Buffervariablen T im Programm verwendet werden und als zu autorisierende Anweisung F eine solche gewählt werden, die Daten in den Buffer hinzufügt. Es liegt also eine lesende und schreibende Anweisung T = F(T,Y) vor, wobei Y die hinzuzufügenden Daten bezeichnet. Als mögliche Umsetzung der Implementierungen und/oder vorgesehenen Zustände können dabei kryptographische Verfahren verwendet werden, die einen Verschlüsselungsalgorithmus E und eine Funktionalität EVAL derart beinhalten, dass die bezüglich der Anweisung pseudo-homomorphe Eigenschaft E_{K3}(F(A,B)) = EVAL_{K3}(F,E_{K1}(A),E_{K2}(B))

mit kryptographischen Schlüsseln K₁, K₂, K₃ gilt. Hierbei ist mit pseudohomomorph gemeint, dass die kryptographischen Schlüssel auch verschieden sein können und damit nur gewisse homomorphe Verschlüsselungsverfahren für das Verfahren in Frage kommen, beispielsweise Multichannel Finite Automata Code Transformation. Überdies lässt sich eine Information über die kryptographischen Schlüssel sicher an die Funktionalität EVAL übergeben, welche den Verschlüsselungszustand der Ein- und Ausgangsargumente definiert. Das Verschlüsselungsverfahren kann etwa mit Hilfe von Methoden der White-Box-Kryptographie oder Programmcode-Obfuscation implementiert werden, welche es erlauben, Schlüsselinformationen zu verbergen. Dabei rechnet die Funktionalität nur dann korrekt, wenn die Verschlüsselungszustände der Ein- und Ausgangsparameter kompatibel mit den übergebenen Schlüsselinformationen sind.

Somit wird zunächst ein Parameter n größer oder gleich eins (n > = 1) bestimmt, der angibt, wie oft man die Anweisung maximal zur nicht autorisierten Ausführung frei zur Verfügung stellen will. Beispielsweise wird dann zur Verschlüsselung der Daten eine dem Parameter entsprechende Menge verschiedener kryptographischer Schlüssel K₀ bis Kₙ generiert. Überdies generiert man beispielsweise einen festen Schlüssel K zur Verschlüsselung der hinzuzufügenden Daten, mit denen die zu autorisierende Anweisung arbeitet. Die Verschlüsselung der hinzuzufügenden Daten ist für die Durchführung des Verfahrens nicht zwingend notwendig, erhöht aber die Sicherheit des Verfahrens, indem einem potentiellen Angreifer erschwert wird, Rückschlüsse auf den Klartext der Daten zu ziehen. Nun transformiert man den Quellcode des Programms derart, dass die Initialisierung der Daten in der ersten Verschlüsselung der Daten (mit dem ersten kryptographischen Schlüssel) vorgehalten wird. Weiter hält man im Quellcode des Programms anstelle der Anweisung funktional äquivalente Implementierungen F_{(0,1)}(E_{K0}(T)) bis F_{(n-1,n)}(E_{Kn-1}(T)) vor, wobei
F_{(i,i+1)}(E_{Ki}(T)) = EVAL_{Ki+1}(F,E_{Ki}(T),E_{K}(Y)) mit i=0, ..., n-1 gilt.

Durch die Implementierung wird auf Grund der Eigenschaften der Funktionalität EVAL sowohl die Anweisung auf den verschlüsselten Daten ausgeführt als auch die Verschlüsselung der Daten verändert. Eine Entschlüsselung findet dabei nicht statt. Durch die Implementierungen und die Verschlüsselungszustände entsteht ein linearer gerichteter Graph mit den Verschlüsselungszuständen als Knoten und den funktional äquivalenten Implementierungen als Kanten.

Um einen höheren Grad an Programmcode-Obfuscation zu erreichen, kann man die Implementierungen auch derart realisieren, dass durch die Verschlüsselungsübergänge E_{Ki}(T)/E_{Kj}(T) ein komplexer zyklenfreier und gerichteter (Multi-)Graph entsteht. Allerdings muss der Graph dann so gebildet werden, dass der längste Pfad ausgehend vom Initialisierungszustand eine Länge aufweist, die der Anzahl der gewünschten Ausführungen ohne Autorisierung entspricht.

Im Programmablauf wird des Weiteren beispielsweise eine Information über den Verschlüsselungsstatus der Daten vorgehalten, mit deren Hilfe der Zugriff auf eine geeignete Implementierung der Anweisung durch eine geeignete Programmlogik verwaltet wird.

Anstelle der zu autorisierenden Anweisung wird bei Zugriff der Applikation im Programmablauf, beispielsweise beginnend mit der Implementierung passend zum ersten kryptographischen Schlüssel als Schlüssel für den Eingangszustand, die zum aktuellen Verschlüsselungszustand der Daten kompatible, zur autorisierenden Anweisung funktional äquivalente, Implementierung ausgeführt.

Parallel zum Programmablauf wird ein geeignetes "Challenge-Response"-Protokoll mit der eigenständigen Autorisierungskomponente ausgeführt. Bei dem Challenge-Response-Verfahren werden die Daten verschlüsselt (etwa in der aktuellen Verschlüsselung) an die Autorisierungskomponente gesendet und diese gibt autorisierte Daten zurück, welche es erlauben, die Daten in den initialen Verschlüsselungsstatus zu schreiben. Beispielsweise kann die Autorisierungskomponente über den Verschlüsselungsalgorithmus E, den zugehörigen Entschlüsselungsalgorithmus E⁻¹, sowie die entsprechenden kryptographischen Schlüssel verfügen. Damit ist die Autorisierungskomponente in der Lage, die Daten zu entschlüsseln, den gewonnenen Klartext mit dem ersten kryptographischen Schlüssel zu verschlüsseln, und beispielsweise die mit dem ersten kryptographischen Schlüssel verschlüsselten Daten als autorisierte Information oder deren Bestandteil zurückzusenden.

Befindet sich die Anweisung während der Ausführung des Challenge-Response-Verfahrens für einen Zeitraum des Programmablaufs im Ruhezustand, d.h. die Applikation, als konkurrierender Thread zum Challenge-Response-Verfahren, greift nicht auf eine Implementierung der Anweisung zu beziehungsweise es werden die Daten und/oder der Zustand nicht verändert, und werden von der Autorisierungskomponente (mit Hilfe des Challenge-Response-Protokoll) autorisierte Daten erhalten, so wird der aktuelle Verschlüsselungszustand in den ersten Verschlüsselungszustand überführt. In diesem Fall hat die Autorisierung des Programms asynchron zum Zugriff auf die Anweisung stattgefunden. Insbesondere verfügt die Implementierung, die Daten verschlüsselt mit dem ersten kryptographischen Schlüssel entgegennehmen kann, wieder über die für ihre Anwendung notwendigen Daten im entsprechenden Ausgangszustand und wird beim nächsten Zugriff der Softwareapplikation auf die Anweisung wieder aufgerufen.

Kann hingegen der aktuelle Verschlüsselungszustand auf Grund des zwischenzeitlichen Zugriffs der Applikation auf die Anweisung beziehungsweise eine Implementierung nicht in den ersten Verschlüsselungszustand überführt werden, so werden die von der Autorisierungskomponente gesendeten Daten verworfen und es wird beim zwischenzeitlichen Zugriff stattdessen die passende Implementierung ausgeführt.

Greift die Applikation kontinuierlich im Programmablauf auf die Anweisung beziehungsweise deren Implementierungen zu, sodass der letzte Verschlüsselungszustand im Graphen, also der Zwangsautorisierungszustand, erreicht wird, so steht die Anweisung erst dann wieder der Applikation zur Verfügung, wenn der oben beschriebene Autorisierungsprozess erfolgreich abgeschlossen werden konnte, also der Verschlüsselungszustand wieder in einen anderen, insbesondere den ersten Verschlüsselungszustand überführt werden konnte. Ist in diesem Szenario die Gesamtanzahl der kontinuierlichen Zugriffe größer als der Parameter n, der angibt, wie oft die Anweisung maximal zur nicht autorisierten Ausführung frei zur Verfügung steht, so wird hier der kontinuierliche Zugriff der Applikation auf die Implementierungen der Anweisung unterbrochen bis eine Autorisierung erfolgt ist. Es ist hierbei jedoch zu beachten, dass man häufig den Parameter n im Entwicklungsstadium der Applikation derart wählen kann, dass solch ein Zugriffsverhalten der Applikation vermieden wird bzw. nur mit einer geringen Wahrscheinlichkeit auftritt, so dass es praktisch nicht zu einer Unterbrechung kommen muss.

Man beachte, dass ein Angreifer bei diesem Verfahren den Verschlüsselungsstatus nicht zurücksetzen kann, da er weder über die kryptographischen Schlüssel verfügt noch über eine Implementierung, die die Daten in einen Zustand verschlüsselt, mit einem in der Reihenfolge der kryptographischen Schlüssel früheren kryptographischen Schlüssel, überführt. Auch kann ein Angreifer durch diese kryptographische Absicherung keine weiteren Implementierungen der Anweisung generieren.

Weiter wird klar, dass die Annahme einer schreibenden und lesenden Anweisung für den Sicherheitsaspekt des Verfahrens von Vorteil ist, da hier der jeweils aktuelle Inhalt der Daten an den jeweiligen, im Programmablauf aktuellen, kryptographischen Schlüssel gebunden ist und somit auch an die passende funktional äquivalente Implementierung der zu autorisierenden Anweisung. Aber auch, wenn das Verfahren für Anweisungen, welche nicht die "read/write" Bedingung erfüllen, verwendet wird, so ist es dennoch als Obfuscation-Verfahren geeignet, welches den Autorisierungsprozess verschleiert.

Die Aufgabe wird auch gelöst durch ein Computerprogrammprodukt aufweisend mindestens einen durch ein Verfahren zur Autorisierung eines nach einem der Ansprüche 1 - 12 geschützten Programmablaufs. In einem solchen Computerprogrammprodukt kommen die Vorteile des Verfahrens besonders zur Geltung. Hier kann beispielsweise eine Lizenzierung oder ein Zugriffsschutz durch das Verfahren realisiert werden.

Gelöst wird die Aufgabe auch durch einen Datenträger beinhaltend ein Computerprogrammprodukt nach dem Anspruch 13. Über einen solchen Datenträger kann das Computerprogrammprodukt beispielsweise ohne weiteren Schutz vertrieben bzw. verteilt werden. Auch Testzeiträume sind denkbar. Eine (weitere) Verwendung oder ein (weiterer) Zugriff kann dann durch das Verfahren gesteuert werden.

Gelöst wird die Aufgabe auch durch eine Datenverarbeitungsanlage oder ein System bestehend aus mehreren Datenverarbeitungsanlagen, eingerichtet zur Durchführung des Verfahrens nach einem der Ansprüche 1 - 12. Dadurch kann eine bestimmte auf einer Datenverarbeitungsanlage installierte Software oder Teile davon geschützt werden. Auch kann eine Datenverarbeitungsanlage an sich geschützt bzw. ihre Verwendung über das Verfahren gesteuert werden. Das System kann dabei eine oder mehrere Datenverarbeitungsanlagen aufweisen, die, insbesondere bezogen auf die erfindungsgemäßen Schritte ausschließlich, als Autorisierungskomponente dienen. In diesem Fall sind entsprechende Kommunikationsmittel vorzusehen.

Ausgewählte vorteilhafte Merkmale und Ausführungen sollen rein exemplarisch und beispielhaft anhand der folgenden Beschreibung geschildert werden. Die Beschreibung stützt sich dabei auf die rein schematischen Zeichnungen. Diese zeigen:
- Fig. 1:: eine Darstellung eines Graphen mit vorgesehenen Zuständen und Implementierungen;
- Fig. 2:: eine Darstellung eines Ablaufes des erfindungsgemäßen Verfahrens und
- Fig. 3:: eine Übersicht über eine weitere mögliche Umsetzung des Verfahrensablaufs.

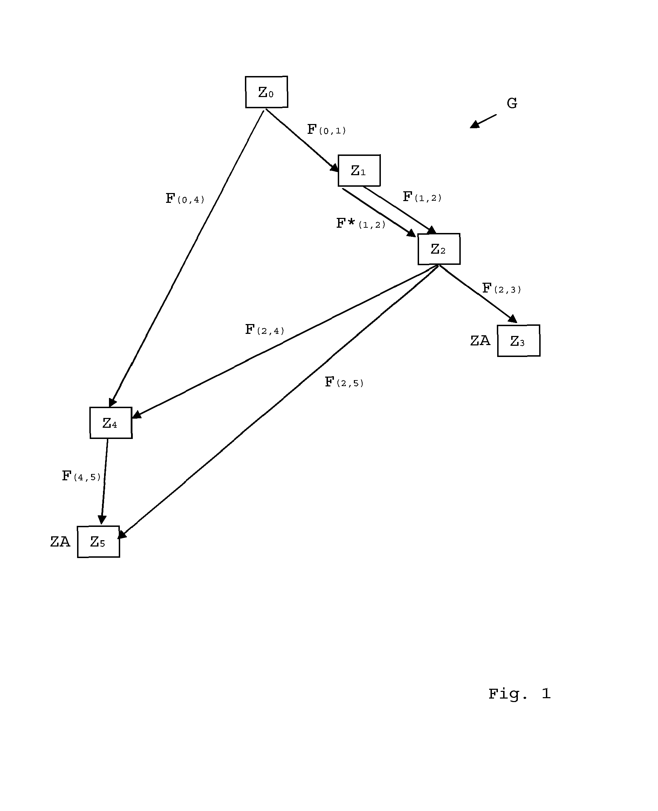

Fig. 1 zeigt einen Multigraphen G. Zu erkennen sind die Zustände Z₀ bis Z₅ sowie Implementierungen F_{(i,j)}. Die Zustände Z₀ bis Z₅ stellen Knoten des Graphen G dar. Die Implementierungen F_{(i,j)} stellen die Kanten des Graphen G dar.

Es ist zu erkennen, dass die Implementierungen F_{(i,j)} mit ihren Indizes (i,j) immer zu den Eingangs bzw. Ausgangszuständen passen, die an sie angrenzen. So führt die Implementierung F_{(0,1)} vom Zustand Z₀ zum Zustand Z₁. Dabei ist der Zustand Z₀ der Eingangszustand und der Zustand Z₁ der Ausgangszustand der Implementierung F_{(0,1)}.

Zu erkennen ist, dass es sich bei dem Multigraphen G um einen zyklenfreien, gerichteten (Multi-)Graphen handelt. Der Multigraph G kennt zwei Äste, gebildet aus den Zuständen zum einen Z₀, Z₄ und Z₅ sowie zum anderen Z₀, Z₁, Z₂ und Z₃. Die Zustände Z₃ und Z₅ stellen jeweils Senken im Graphen G dar und bilden somit Zwangsautorisierungszustände ZA. Erkennbar ist des Weiteren, dass es Implementierungen F_{(2,4)} und F_{(2,5)} gibt, die von einem Ast zum anderen führen. Auch ist zu erkennen, dass eine Mehrfachkante zwischen den Zuständen Z₁ und Z₂ existiert, die durch die Implementierungen F_{(1,2)} und F*_{(1,2)} gebildet wird. In diesem Fall vermitteln mehrere Implementierungen zwischen dem jeweiligen Eingangs- und Ausgangszustand Z₁ und Z₂. Aus Zwangsautorisierungszuständen ZA, Z₃ und Z₅, führen keine Kanten weiter. Es existieren somit keine Implementierungen, die Z₃ bzw. Z₅ als Eingangszustand entgegennehmen können. Somit ist von ihnen aus keine Verwendung der Anweisung F möglich, sofern nicht eine Überführung aus den Zwangsautorisierungszuständen ZA, Z₃ und Z₅ in andere Zustände, die keine Senken darstellen, durchgeführt wird.

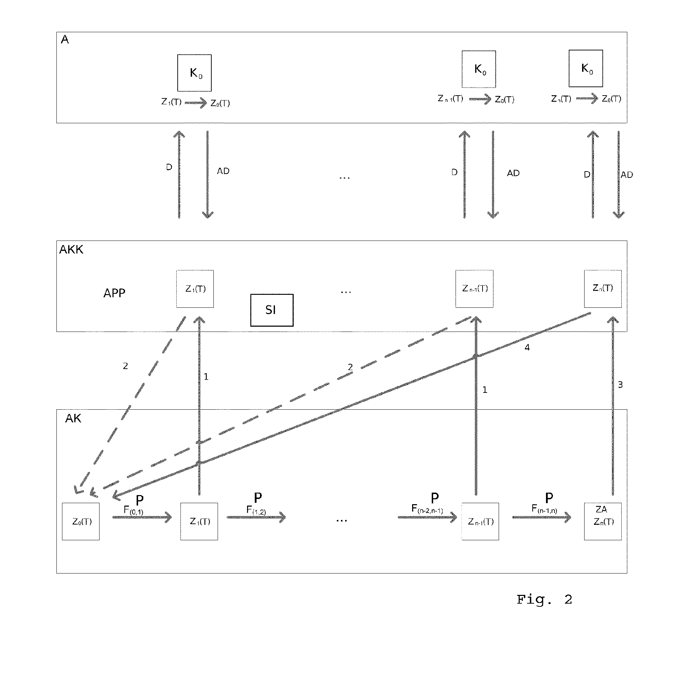

Fig. 2 zeigt eine Übersicht über einen möglichen erfindungsgemäßen Verfahrensablauf, angelehnt an das oben allgemein beispielhaft beschriebene Verfahren. Zu erkennen sind drei Komponenten. Zum einen eine Arbeitskomponente AK, die einen zu autorisierenden Programmablauf P sowie Implementierungen F_{(i,j)} einer Anweisung F beinhaltet. Zum anderen zu erkennen ist eine Autorisierungskoordinationskomponente AKK, die Autorisierungsprogrammablaufpfade APP beinhaltet. Zuletzt zu erkennen ist eine Autorisierungskomponente A.

Innerhalb der Arbeitskomponente AK sind Daten T in Zuständen Zᵢ(T) vorgehalten. Die Zustände weisen einen Zustandsindex i = 0, ..., n mit n > = 1 auf. Die Implementierungen F_{(i,j)} überführen die Zustände Zᵢ der Daten T bzw. die Daten T von einem Eingangszustand Zᵢ in einen anderen Ausgangszustand Zⱼ. Dabei wird der Zustand bei jeder Ausführung einer Implementierung F_{(i,j)} verändert. Dies kann so lange erfolgen, bis ein Zwangsautorisierungszustand ZA erreicht ist. Dies ist in diesem Beispiel im Zustand Zₙ(T) der Fall. Die Zustände Zₒ bis Zₙ und die Implementierungen F_{(i,j)} bilden in diesem Beispiel einen linearen Graphen.

Parallel zur Arbeitskomponente wird die Autorisierungskoordinationskomponente AKK ausgeführt. Ihre Autorisierungsprogrammablaufpfade APP übernehmen in regelmäßigen Abständen die Zustände Zᵢ von der Arbeitskomponente für einen Beginn eines Autorisierungsversuchs 1. Sie generieren Übergabedaten D, die sie an die Autorisierungskomponente übermitteln. Beispielsweise handelt es sich dabei um einen Zustand Zᵢ(T) sowie eine Information über den zum Zustand Zᵢ passenden kryptographischen Schlüssel Kᵢ, der als Statusinformation SI abgelegt ist. Die Übergabedaten D werden an die Autorisierungskomponente A übergeben. In der Autorisierungskomponente A findet beispielsweise eine Umverschlüsselung statt, die den Zustand Zᵢ(T) in den initialen Zustand Zₒ(T) überführt. Dazu verwendet die Autorisierungskomponente in diesem Beispiel unter anderem den kryptographischen Schlüssel Kₒ, der in ihr beinhaltet ist bzw. von ihr generiert werden kann. Als autorisierte Information AD übermittelt die Autorisierungskomponente A nach erfolgreicher Umverschlüsselung beispielsweise den neuen Zustand der Daten sowie eine Information über den zu diesem Zustand passenden kryptographischen Schlüssel Kₒ an die Autorisierungskoordinationskomponente AKK. Diese prüft nun beispielweise, ob in der Arbeitskomponente AK noch der ursprünglich von ihr übernommene Zustand vorliegt, oder ob der Zustand in der Arbeitskomponente AK mittlerweile ein anderer ist. Ist der Zustand nicht mehr derselbe, so scheitert der Autorisierungsprozess, was durch einen gestrichelten Pfeil 2 in der Fig. 2 dargestellt ist. Eine Überführung des Zustandes sowie eine Veränderung der Statusinformation SI in der Arbeitskomponente AK auf Grundlage der autorisierten Information AD finden somit nicht statt. Stattdessen hat eine Veränderung des Zustandes Zᵢ(T) und der Statusinformation SI auf Grund der Anwendung einer der funktional äquivalenten Implementierungen F_{(i,j)} der zu autorisierenden Anweisung F stattgefunden. In dem gezeigten Beispiel in Fig. 2 findet ein solch gescheiterter Autorisierungsprozess n-1 mal statt. Letztendlich endet in der Arbeitskomponente AK die Möglichkeit der Ausführung der Anweisung F im Zwangsautorisierungszustand ZA, dem Zustand Zₙ(T).

Eine weitere zutreffende Interpretation der gestrichelten Pfeile 2 ist die eines erfolgreichen Autorisierungsvorgangs vor Erreichen des Zwangsautorisierungszustands ZA, nachdem erneut Implementierungen F_{(i,j)} der Anweisung F angewandt werden, bis letztendlich der Zwangsautorisierungszustand ZA, der Zustand Zₙ(T), erreicht wird.

Ist der Zwangsautorisierungszustand ZA, der Zustand Zₙ(T), erreicht, wird ein Autorisierungsprogrammablaufpfad ausgeführt und ein Zwangsautorisierungsprozess 3 begonnen. Dabei übernimmt die Autorisierungskoordinationskomponente AKK beispielsweise den Zustand Zₙ(T) und übergibt diesen zusammen mit der Statusinformation SI bezüglich des passenden kryptographischen Schlüssels Kₙ als Übergabedaten D an die Autorisierungskomponente A. Diese führt beispielsweise unter Zuhilfenahme des kryptographischen Schlüssels Kₙ sowie des kryptographischen Schlüssels K₀ eine Umverschlüsselung des Zustands Zₙ(T) in den Zustand Z₀(T) durch und übermittelt diesen Zustand Z₀(T) wie die Information über den passenden kryptographischen Schlüssel, jedoch ohne den eigentlichen Schlüssel Kₒ als autorisierte Information AD an die Autorisierungskoordinationskomponente AKK. Diese führt den Zwangsautorisierungsprozess zu Ende, was in Fig. 2 mit Pfeil 4 gekennzeichnet ist. Dadurch wird in der Arbeitskomponente AK der Zustand Zₙ(T) in den Zustand Z₀(T) überführt. Die Autorisierungskoordinationskomponente AKK vermerkt als Statusinformation SI, dass der aktuell gültige Schlüssel der kryptographische Schlüssel Ko ist.

Nun kann die Arbeitskomponente AK erneut die Anweisung F bzw. eine passende funktional äquivalente Implementierung der zu autorisierenden Anweisung F ausführen.

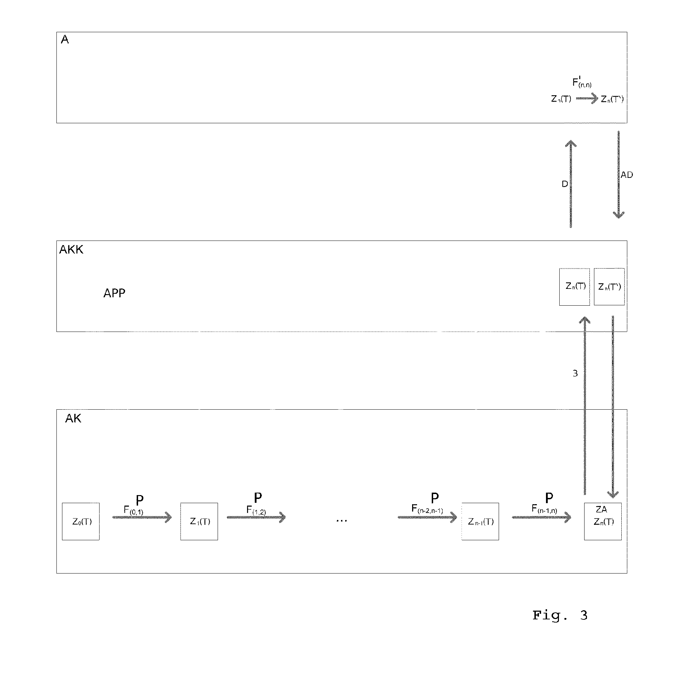

Fig. 3 zeigt eine weitere Umsetzung des erfindungsgemäßen Verfahrens bei dem eine synchrone Autorisierung mit einem vorbestimmten Verhalten der Applikation kombiniert ist. Dabei ist die Ausführung der Funktionalität der Anweisung teilweise in die Autorisierungskomponente A verlagert. Dies kann beispielsweise gewählt werden, wenn zunächst eine gewisse Anzahl von Ausführungen der Anweisung ohne Autorisierung erlaubt sein und anschließend eine synchrone Autorisierung vorgesehen werden soll.

Zu erkennen sind wieder drei Komponenten, Arbeitskomponente AK, Autorisierungskoordinationskomponente AKK sowie Autorisierungskomponente A. Prinzipiell lassen sich immer auch die Arbeitskomponente AK und die Autorisierungskoordinationskomponente AKK zusammenfassen. Auch hier ist der Programmablauf P wieder Teil der Arbeitskomponente AK. Der Programmablauf P beinhaltet die Implementierungen F_{(i,j)}. Die Autorisierungskoordinationskomponente AKK, deren Funktion optional auch in der Arbeitskomponente AK realisiert sein kann, beinhaltet genau einen Autorisierungsprogrammablaufpfad APP. Zu erkennen ist, dass hier vor Erreichen des Zwangsautorisierungszustands ZA, Zₙ(T), keine Autorisierung versucht wird. Erst bei Erreichen des Zwangsautorisierungszustandes ZA wird durch den Autorisierungsprogrammablaufpfad ein Zwangsautorisierungsprozess 3 eingeleitet. Hier übernimmt die Autorisierungskoordinationskomponente AKK den Zwangsautorisierungszustand ZA, Zₙ(T). Diesen übergibt sie als Übergabedaten an die Autorisierungskomponente A. Die Autorisierungskomponente A führt darauf eine Implementierung F_{(n,n)} eine der Anweisung F in der Funktionalität entsprechende Anweisung F' aus. Dabei wird der Zwangsautorisierungszustand ZA, Zₙ(T), in den Zwangsautorisierungszustand ZA, Zₙ(T'), überführt. Dabei wird jedoch die entsprechende Anweisung F' von der Autorisierungskomponente A ausgeführt und somit werden die als Übergabedaten D übergebenen Daten T von der Autorisierungskomponente A verändert. Diese veränderten Daten T' im Zustand Zₙ übergibt die Autorisierungskomponente A als autorisierte Information AD an die Autorisierungskoordinationskomponente AKK. Diese überträgt diese in die Arbeitskomponente AK, sodass dort wieder ein Zwangsautorisierungszustand ZA vorliegt. Ein solches Verfahren lässt sich mit dem in Fig. 2 dargestellten Verfahren kombinieren.

### Bezugszeichenliste

- P: Programmablauf F Anweisung
- F': entsprechende Anweisung
- F_{(i,j)}: Implementierung
- D: Übergabedaten
- T: Daten
- Zₙ: vorgesehene Zustände
- AD: autorisierte Information
- APP: Autorisierungsprogrammablaufpfad
- A: Autorisierungskomponente
- AKK: Autorisierungskoordinationskomponente
- AK: Arbeitskomponente
- Kᵢ: kryptographischer Schlüssel
- SI: Statusinformation
- ZA: Zwangsautorisierungszustand
- 1: Beginn eines Autorisierungsversuch
- 2: gescheiterter Autorisierungsprozess
- 3: Beginn eines Zwangsautorisierungsprozesses
- 4: Ende eines erfolgreichen Zwangsautorisierungsprozesses

## Patentansprüche

1. Verfahren zur asynchronen Autorisierung eines Programmablaufs (P),
a. wobei die Durchführung des Verfahrens in mindestens drei Komponenten gegliedert ist, und zwar eine Arbeitskomponente (AK), eine Autorisierungskoordinationskomponente (AKK) und eine Autorisierungskomponente (A), wobei Daten (T) des Programmablaufs (P), zu einer Anweisung (F) des Programmablaufs (P) funktional äquivalente Implementierungen (Fᵢ) und der Programmablauf (P) Bestandteil der Arbeitskomponente (AK) sind und mindestens ein Autorisierungsprogrammablaufpfad (APP) von der Autorisierungskoordinationskomponente (AKK) durchgeführt wird,
b. wobei für die Daten (T) des Programmablaufs (P) mindestens zwei kryptographische Schlüssel (Kᵢ), bezüglich eines Verschlüsselungsverfahrens (E) in einer für das Verfahren vorgegebenen Reihenfolge (0, ..., n, mit n > = 1), vorgehalten werden, wobei die Anzahl der vorgehaltenen kryptographischen Schlüssel (Kᵢ) endlich ist und,
c. wobei die Anweisung (F) des Programmablaufs (P), die auf die Daten (T) zugreift, in den funktional äquivalenten Implementierungen (F₀ ,..., Fₙ₋₁) vorgehalten wird, wobei zu jedem der vorgehaltenen Schlüssel (Kᵢ), welcher nicht der letzte Schlüssel (Kₙ) in der vorgegebenen Reihenfolge (0,...,n) ist, eine Implementierung (Fᵢ) existiert, welche die Daten (T) von der Verschlüsselung (E_{Ki}(T)) in die Verschlüsselung (E_{Ki+1}(T)) mit dem in der vorgegebenen Reihenfolge (0,...,n) nachfolgenden Schlüssel, mit Hilfe von Methoden der White-Box Kryptographie, überführt und es keine solche funktional äquivalente Implementierung der Anweisung (F) im Programmcode gibt, welche die Daten (T) von der Verschlüsselung(E_{Kn}(T)) bezüglich des letzten Schlüssels (Kₙ) in eine Verschlüsselung (E_{Ki}(T)) mit einem anderen der vorgehaltenen Schlüssel, überführt,
d. im Autorisierungsprogrammablaufpfad (APP) Übergabedaten (D), wobei die Übergabedaten (D) eine Verschlüsselung (E_{Ki}(T)) der Daten (T) mit einem der vorgehaltenen Schlüssel (K₀, ..., Kₙ) beinhalten, an eine Autorisierungskomponente (A) übergeben werden und diese, insbesondere nur bei Vorliegen vorbestimmter Bedingungen, mindestens eine autorisierte Information (AD) zurückgibt
**dadurch gekennzeichnet, dass**
e. die kryptographischen Schlüssel (K₀, ..., Kₙ) paarweise verschieden sind (Kᵢ ungleich Kⱼ)
f. und bei Aufruf der Anweisung (F) im Programmablauf (P), wenn sich die Daten (T) in einer Verschlüsselung (E_{Ki}(T)) mit einem Schlüssel (Kᵢ) welcher nicht der letzte Schlüssel (Kₙ) ist, befinden, die zum aktuellen Schlüssel entsprechende Implementierung (Fᵢ) ausgeführt wird,
g. und mindestens einmal, wenn sich die Daten in einer Verschlüsselung (E_{Ki} (T)) mit Schlüssel (Kᵢ), welcher nicht der letzte Schlüssel (Kₙ) ist, befinden, der mindestens eine Programmablaufpfad (APP) aufgerufen wird und wobei die autorisierte Information (AD) eine Verschlüsselung (E_{Kj}(T)) der Daten (T) mit einem vorgehaltenen Schlüssel (Kⱼ)), welcher in der vorgegebenen Reihenfolge (0,...,n) vor dem Schlüssel liegt, mit dem die übergebenen Daten verschlüsselt waren (j < i), beinhaltet und die autorisierte Information zur Veränderung der Verschlüsselung der Daten verwendet wird, nur dann, wenn die Daten (T) seit der Übergabe der Übergabedaten (D) nicht verändert wurden,
h. und, wenn sich die Daten (T) in der Verschlüsselung (E_{Kn}(T)) mit dem letzten Schlüssel (Kₙ) befinden, die weitere Verwendung der Anweisung (F) des Programmablaufs (P) nur möglich ist, wenn
I. der mindestens eine Autorisierungsprogrammablaufpfad (APP) aufgerufen wird und die autorisierte Information (AD) von der Autorisierungskomponente (A) zurückgegeben wird und
II. die autorisierte Information (AD) entweder eine Verschlüsselung (E_{Ki}(T)) der Daten (T) mit einem der vorgehaltenen Schlüssel (K₀,..., Kₙ₋₁), welcher ungleich dem letzten Schlüssel (Kₙ) ist, beinhaltet oder eine Verschlüsselung (E_{Ki}(T)) eines Ergebnisses einer in ihrer Funktionalität der Anweisung (F) entsprechenden Anweisung (F') auf die Daten (T) mit einem beliebigen der vorgehaltenen Schlüssel (K₀, ..., Kₙ), beinhaltet.

2. Verfahren nach dem vorstehenden Anspruch 1, wobei die funktional äquivalenten Implementierungen der mindestens einen Anweisung sowie die Implementierungen von Teilen des mindestens einen Autorisierungsprogrammablaufpfades ein kryptographisches Verfahren verwendet, insbesondere Multi Channel Finite Automata Code Transformation, welches es erlaubt, Operationen auf Argumenten, die mit verschiedenen Schlüsseln verschlüsselt sind, durchzuführen, ohne die jeweiligen Argumente zu entschlüsseln.

3. Verfahren nach einem der vorstehenden Ansprüche, wobei die Übergabedaten (D) an die Autorisierungskomponente (A) verschleiert und/oder verschlüsselt werden, mit einem Verschlüsselungsverfahren, welches vom Verschlüsselungsverfahren (E), welches zur Verschlüsselung der Daten (T) im Programmablauf (P) dient, verschieden ist,und/oder die Autorisierungskomponente die autorisierte Information (AD) verschleiert und/oder verschlüsselt mit einem Verschlüsselungsverfahren, welches vom Verschlüsselungsverfahren (E) welches zur Verschlüsselung der Daten (T) im Programmablauf (P) verschieden ist,zurückgibt.

4. Verfahren nach einem der vorstehenden Ansprüche, wobei die Übergabe der Übergabedaten (D) an die Autorisierungskomponente (A), das Empfangen der durch die Autorisierungskomponente zurückgegebenen autorisierten Information (AD) und die Überführung in eine Verschlüsselung mit einem der vorgehaltenen Schlüssel (K₀, ..., Kₙ) im Rahmen des Autorisierungsprogrammablaufpfades (APP) von der Autorisierungskoordinationskomponente (AKK) durchgeführt werden.

5. Verfahren nach einem der vorstehenden Ansprüche, wobei die Autorisierungskoordinationskomponente (AKK) parallel zur Arbeitskomponente (AK) ausgeführt wird und insbesondere ein selbstständiger, parallel laufender Computerprogrammbestandteil, insbesondere ein eigener Thread oder Teil eines selbstständigen, parallel laufenden Computerprogramms ist.

6. Verfahren nach einem der vorstehenden Ansprüche, wobei eine Statusinformation (SI) über die Daten (T) des Programmablaufs (P), insbesondere über den aktuell verwendeten kryptographischen Schlüssel (Kᵢ) und/oder die kompatible Implementierung (Fᵢ) vorgehalten wird.

7. Verfahren nach einem der vorstehenden Ansprüche, wobei sich mindestens eine vorgehaltene Implementierung (Fᵢ) und/oder mindestens ein Schlüssel (Kᵢ) aus mindestens einer zuvor ausgeführten Implementierung bzw. mindestens einem zuvor verwendeten Schlüssel und/oder weiteren für den Programmablauf (P) relevanten Daten nach einer Vorschrift bestimmen lässt und insbesondere in Form der Vorschrift vorgehalten wird.

8. Verfahren nach einem der vorstehenden Ansprüche, wobei die Autorisierungskomponente (A) örtlich entfernt von der Durchführung der nicht durch die Autorisierungskomponente durchgeführten Schritte angeordnet bzw. durchgeführt wird und insbesondere die an die Autorisierungskomponente übertragenen Übergabedaten (D) und die autorisierte Information (AD) über ein Datenübertragungsnetzwerk, insbesondere das Internet, übergeben werden.

9. Computerprogrammprodukt, aufweisend mindestens einen durch ein Verfahren zur Autorisierung nach einem der Ansprüche 1 bis 8 geschützten Programmablauf.

10. Datenträger aufweisend ein Computerprogrammprodukt nach dem vorstehenden Anspruch.

11. Datenverarbeitungsanlage oder System von Datenverarbeitungsanlagen, eingerichtet zur Durchführung des Verfahrens nach einem der Ansprüche 1 bis 8.

## Claims

1. A method of asynchronous authorisation of a programme sequence (P),
a. where the execution of the method is broken down in at least three components, namely a working component (AK), an authorisation co-ordination component (AKK) and an authorisation component (A), whereas data (T) of the programme sequence (P), are implementations (R) functionally equivalent to a command (F) of the programme sequence (P) and the programme sequence (P) is part of the working component (AK) and at least one authorisation programme sequence path (APP) is performed by the authorisation co-ordination component (KK),
b. whereas for the data (T) of the programme sequence (P) at least two cryptographic keys (Ki), as regards an encoding method (E ), are available in a series provided for the method (0, ..., n with n >= 1), whereas the number of available cryptographic keys (Ki) is finite and,
c. whereas the command (F) of the programme sequence (P), which accesses the data (T), is available in the functionally equivalent implementations (F0, ..., Fn-i), whereas for each of the available keys (Ki), which is not the last key (Kn) in the present series (0, ..., n) there is an implementation (R), which transfers the data (T) from the encoding (E_{Ki}(T)) to the encoding (EKI+1(T)) with the next key in the present series (0, ..., n), using white-box cryptography methods and there is no such functionally equivalent implementation of the command (F) in the programme code, which transfers the data (T) from the encoding (EKn(T)) as regards the last key (Kn) into an encoding (EKJ(T)) with another available key,
d) transfer data (D) in the authorisation programme sequence path (APP), whereas the transfer data (D) contain an encoding (EKi(T)) of the data (T) with one of the available keys (Ko, ..., Kn), are transferred to an authorisation component (A) and said transfer data return at least one authorised piece of information (AD), especially in the presence of pre-set conditions,
**characterised in that**
e. the cryptographic keys (Ko, ..., Kn) are different in pairs (Ki is different from Kj)
f. and when invoking the command (F) in the programme sequence (P), when the data (T) are situated in an encoding (EKJ(T)) with a key (Ki) which is not the last key (Kn), the implementation (R) corresponding to the current key is performed,
g. and at least once, when the data are situated in an encoding (Eki(T)) with a key (Ki) which is not the last key (Kn), said at least one programme sequence path (APP) is invoked and whereas the authorised piece of information (AD) contains an encoding (Ekj(T)) of the data (T) with an available key (Kj) which is situated in the present series (0, ..., n) before the key, with which the transmitted data were encoded (j < i) and the authorised piece of information is used to modify the encoding of the data, only once the data (T) have not been modified since the transmission of the transfer data (D),
h. and if the data (T) are situated in the encoding (EKn(T)) with the last key (Kn), the further use of the command (F) of the programme sequence (P) is only possible if
i. said at least one authorisation programme sequence path (APP) is invoked and the authorised piece of information (AD) is returned by the authorisation component (A) and
ii. the authorised piece of information (AD) contains either an encoding (EKI(T)) of the data (T) with one of the available keys (Ko,...,Kn-i), which is different from the last key (Kn) or contains an encoding (EKI(T)) of a result of a command (F') whose functionality matches the command (F') referring to the data (T) with any of the available keys (Ko, ..., Kn).

2. The method according to the previous claim 1, whereas the functionally equivalent implementations of said at least one command as well as the implementations of parts of said at least one authorisation programme sequence path uses a cryptographic method, in particular Multi Channel Finite Automata Code Transformation, which enables to perform operations on arguments which are encoded with different keys, without decoding the respective arguments.

3. The method according to one of the previous claims, whereas the transmission data (D) to the authorisation component (A) are concealed and/or encoded, with an encoding method, which is different from the encoding method (E) used for encoding the data (T) in the programme sequence (P),and/or the authorisation component returns the authorised piece of information (AD) concealed and/or encoded with an encoding method, which is different from the encoding method (E) used for encoding the data (T) in the programme sequence (P).

4. The method according to one of the previous claims, whereas the transmission of the transfer data (D) to the authorisation component (A), the reception of the piece of information (AD) authorised and returned by the authorisation component and the transfer into an encoding with one of the available keys (Ko, ..., Kn) are performed in the framework of the authorisation programme sequence path (APP) by the authorisation co-ordination component (AKK).

5. The method according to one of the previous claims, whereas the authorisation co-ordination component (AKK) is executed parallel to the working component (AK) and is in particular a standalone computer programme constitutive element, running in parallel, in particular a proper thread of a standalone computer programme, running in parallel.

6. The method according to one of the previous claims, whereas a piece of status information (SI) regarding the data (T) of the programme sequence (P), in particular pertaining to the cryptographic key (Ki) currently used and/or the compatible implementation (R) is available.

7. The method according to one of the previous claims, whereas at least one available implementation (Fi) and/or at least one key (Ki) can be determined from at least one implementation carried out previously or at least one key used previously and/or from additional data relevant for the programme sequence (P) according to a regulation and is available in particular as prescribed.

8. The method according to one of the previous claims, whereas the authorisation component is situated or carried out remotely from the execution of the steps which are performed by the authorisation component and the transfer data (D) transmitted to the authorisation component and the authorised piece of information (AD) are transferred via a data transmission network, in particular the internet.

9. A computer programme product, having at least one programme sequence protected by an authorisation method according to one of claims 1 to 8.

10. A data carrier having a computer programme product according to the previous claim.

11. A data processing equipment or a system of data processing equipment, designed for executing the method according to one of the claims 1 to 8.

## Revendications

1. Procédé d'autorisation asynchrone d'une séquence de programme (P),
a. où l'exécution du procédé est divisée en au moins trois composantes, à savoir une composante de travail (AK), une composante de coordination d'autorisation (AKK) et une composante d'autorisation (A), où les données (T) de la séquence de programme (P) sont des mises en oeuvre (R) fonctionnellement équivalentes à une commande (F) de la séquence de programme (P) et la séquence de programme (P) fait partie de la composante de travail (AK) et au moins un parcours de séquence de programme d'autorisation (APP) est réalisé par la composante de coordination d'autorisation (KK),
b. où pour les données (T) de la séquence de programme (P) au moins deux clés cryptographiques (Ki), en ce qui concerne un procédé de codage (E), sont disponibles dans une série fournie pour le procédé (0, ..., n avec n >= 1), où le nombre de clés cryptographiques disponibles (Ki) est fini et,
c. où la commande (F) de la séquence de programme (P) qui accède aux données (T), est disponible dans les mises en oeuvre fonctionnellement équivalentes (F0, ..., Fn-i), où pour chacune des clés disponibles (Ki), qui n'est pas la dernière clé (Kn) dans la présente série (0, ..., n) il existe une mise en oeuvre (R), qui transfère les données (T) du codage (EKI(T)) au codage (EKI+1 (T)) avec la clé suivante dans la présente série (0, ..., n) à l'aide des procédés de cryptographie white-boxe, il n'y a pas de telle mise en oeuvre fonctionnellement équivalente de la commande (F) dans le code de programme, qui transfère les données (T) à partir du codage (EKn(T)) en ce qui concerne la dernière clé (Kn) dans un codage (EKJ(T)) avec une autre clé disponible,
d) des données de transfert (D) dans le parcours de séquence de programme d'autorisation (APP), où les données de transfert (D) contiennent un codage (EKi(T)) des données (T) avec l'une des clés disponibles (Ko, ..., Kn), sont transférées à une composante d'autorisation (A) et lesdites données renvoient au moins une information autorisée (AD), en particulier en présence de conditions prédéfinies,
**caractérisé en ce que**
e. les clés cryptographiques (K0, ..., Kn) sont différentes par paires (Ki est différente de Kj)
f. et lorsque l'on invoque la commande (F) dans la séquence de programme (P), lorsque les données (T) sont situées dans un codage (EKJ(T)) avec une clé (Ki) différente de la dernière clé (Kn), la mise en oeuvre (R) correspondant à la clé courante est réalisée,
g. et au moins une fois, lorsque les données sont situées dans un codage (Ekj(T)) avec une clé (Ki) différente de la dernière clé (Kn), au moins un parcours de séquence de programme (APP) est invoqué et où l'information autorisée (AD) contient un codage Ekj(T)) des données (T) avec une clé disponible (Ki) qui est située dans la présente série (0, ..., n) avant la clé, avec laquelle les données transmises sont codées (j < i) et l'on utilise l'information autorisée pour modifier le codage des données, seulement une fois que les données (T) n'ont pas été modifiées depuis la transmission des données de transfert (D),
h. et si les données (T) sont situées dans le codage (EKn(T)) avec la dernière clé (Kn), la poursuite de l'utilisation de la commande (F) de la séquence de programme (P) n'est possible que si
i. ledit au moins un parcours de séquence de programme d'autorisation (APP) est invoqué et si l'information autorisée (AD) est retournée par la composante d'autorisation (A) et
ii. l'information autorisée (AD) contient soit un codage (EKI(T)) des données (T) avec l'une des clés disponibles (K0, ..., Kn-i), qui est différente de la dernière clé (Kn) ou bien contient un codage (EKI(T)) d'un résultat d'une commande (F') dont la fonctionnalité correspond à la commande (F') renvoyant aux données (T) avec l'une quelconque des clés disponibles (K0, ..., Kn).

2. Procédé selon la revendication précédente 1, où les mises en oeuvre fonctionnellement équivalentes de ladite au moins une commande de même que les mises en oeuvre de parties dudit au moins un parcours de séquence de programme d'autorisation utilise un procédé cryptographique, en particulier la « Multi Channel Finite Automata Code Transformation », qui permet de réaliser des opérations sur des arguments codés à l'aide de différentes clés, sans décoder les arguments respectifs.

3. Procédé selon l'une des revendications précédentes, où les données de transmission (D) vers la composante d'autorisation (A) sont cachées et/ou codées, avec un procédé de codage, qui est différent du procédé de codage (E) servant au codage des données (T) dans la séquence de programme (P) et/ou la composante d'autorisation renvoie l'information autorisée (AD) cachée et/ou codée à l'aide d'un procédé de codage, qui est différent du procédé de codage (E) utilisé pour le codage des données (T) dans la séquence de programme (P).

4. Procédé selon l'une des revendications précédentes, où la transmission des données de transfert (D) vers la composante d'autorisation (A), la réception de l'information (AD) autorisée et retournée par la composante d'autorisation et le transfert en codage avec l'une des clés disponibles (K0, ..., Kn) sont réalisés dans le cadre du parcours de séquence de programme d'autorisation (APP) par la composante de coordination d'autorisation (AKK).

5. Procédé selon l'une des revendications précédentes, où la composante de coordination d'autorisation (AKK) est exécutée parallèlement à la composante de travail (AK) et est en particulier un élément constitutif de programme informatique indépendant, fonctionnant en parallèle, en particulier un fil proprement dit d'un programme informatique indépendant, fonctionnant en parallèle.

6. Procédé selon l'une des revendications précédentes, où une information de statut (SI) concernant les données (T) de la séquence de programme (P), en particulier portant sur la clé cryptographique (Ki) couramment utilisée et/ou la mise en oeuvre compatible (R) est disponible.

7. Procédé selon l'une des revendications précédentes, où au moins une mise en oeuvre disponible (Fi) et/ou au moins une clé (Ki) peut être déterminée à partir d'au moins une mise en oeuvre effectuée précédemment ou bien au moins une clé utilisée précédemment et/ou à partir de données supplémentaires concernant la séquence de programme (P) en fonction d'une réglementation et est disponible en particulier comme cela est prescrit.

8. Procédé selon l'une des revendications précédentes, où la composante d'autorisation est située ou effectuée à une certaine distance de l'exécution des phases qui sont réalisées par la composante d'autorisation et les données de transfert (D) transmises à la composante d'autorisation et l'information autorisée (AD) sont transférées par le biais d'un réseau de transmission de données, en particulier internet.

9. Produit de programme informatique, présentant au moins une séquence de programme protégée par un procédé d'autorisation selon l'une des revendications 1 à 8.

10. Porteuse de données possédant un produit de programme informatique selon la revendication précédente.

11. Equipement de traitement de données ou système d'équipements de traitement de données, conçus pour exécuter le procédé selon l'une des revendications 1 à 8.
